# EUROPEAN PATENT APPLICATION

(11) **EP 4 850 543 A1**
(43) Date of publication of application: **09.12.2026**
(21) Application number: 25180648.5
(22) Date of filing: 04.06.2025
(51) Int. Cl.: A24F 40/40, A24F 40/42, H01R 13/00

(54) **AEROSOL-GENERATING SYSTEM**

(71) Applicant: Imperial Tobacco Limited, Bristol BS3 2LL (GB)
(72) Inventor: RODRIGUEZ JIMENEZ, Gaspar, Bristol, BS3 2LL (GB); TAYLOR, Phillip Michael James, Bristol, BS3 2LL (GB); HATTON, Kevin Paul, Bristol, BS3 2LL (GB)
(74) Representative: Mewburn Ellis LLP

(57) **Abstract**

An aerosol-generating device 110 comprising: an interface 111 for receiving an aerosol-generating article 120, the interface comprising first 113, second 114 and third 115 electrical contacts; and a controller 117 configured to, upon an aerosol-generating article being associated with the interface, enable power to the aerosol-generating article via the second and third electrical contacts according to: a first power profile if a short circuit between the first and second electrical contacts is detected; or a second power profile if a short circuit between the first and second electrical contacts is not detected.

## Description

### FIELD

The present disclosure relates to an aerosol-generating system, an aerosol-generating device and an aerosol-generating article.

### BACKGROUND

Known aerosol-generating systems typically include an aerosol-generating device and an aerosol-generating article. The aerosol-generating device may comprise a power source and the aerosol-generating article may comprise a heater and a storage portion for storing aerosol-forming material. In use, the aerosol-generating article may engage with the aerosol-generating device such that power is supplied from the power source to the heater to aerosolise the aerosol-forming material. Different types of aerosol-generating articles may contain different types of heaters. Different heaters can have different power requirements. It is important that the correct power is supplied to ensure safe and reliable aerosol generation. It is against this background that the present invention has been developed.

### SUMMARY

At its most general, the present disclosure provides an aerosol-generating system that is configured to allow an aerosol-generating device to distinguish between different types of aerosol-generating articles connected thereto.

In a first aspect, the present disclosure provides, an aerosol-generating device. The aerosol-generating device may comprise an interface for receiving an aerosol-generating article. The interface may comprise first, second and third electrical contacts. The aerosol-generating device may comprise a controller. The controller may be configured to, upon an aerosol-generating article being associated with the interface, enable power to the aerosol-generating article via the second and third electrical contacts according to: a first power profile if a short circuit between the first and second electrical contacts is detected; or a second power profile if a short circuit between the first and second electrical contacts is not detected.

In this way, two different types of aerosol-generating articles (e.g. a first aerosol-generating article configured to short circuit the first and second electrical contacts and having a first heater (e.g. a mesh heater) requiring the first power profile and a second aerosol-generating article configured to not short circuit the first and second electrical contacts and having a second heater (e.g. a ceramic heater) requiring the second power profile) can be used with the aerosol-generating device because the aerosol-generating device is able to distinguish between the first and second aerosol-generating articles and supply power appropriately. This improves user experience because both types of aerosol-generating articles can be used alternatively with the aerosol-generating device.

Furthermore, the aerosol-generating device can distinguish between two different types of aerosol-generating articles (e.g. the first aerosol-generating article and the second aerosol-generating article) without relying on a resistance measurement of a heater of the aerosol-generating article. This is advantageous because different types of heaters (e.g. mesh heater, ceramic heater) may each have a range of resistance values due to tolerance in the manufacturing process. Accordingly, the range of resistance values for a first type of heater (e.g. mesh heater) may overlap with the range of resistance values for a second type of heater (e.g. ceramic heater). Accordingly, merely measuring the resistance value of the heater may not accurately determine the type of heater which could inadvertently lead to the incorrect power profile being supplied. The aerosol-generating device of the present disclosure alleviates this problem by foregoing the resistance measurement in favour of detecting a short circuit between the first and second electrical contacts which provides a more reliable way to distinguish between two different types of aerosol-generating articles (i.e. including different heaters).

Optional features are applicable in combination and with any aspect.

The aerosol-generating device may be configured to supply power to the aerosol-generating article (e.g. the first or second aerosol-generating article) according to the first or second power profile via the second and third electrical contacts of the interface. The second and third electrical contacts may be configured to enable power to an aerosol-generating article (e.g. the first aerosol-generating article or the second aerosol-generating article) associated with the interface.

The first and/or second power profile may be a non-zero power profile. The first and/or second power profile may comprise specific power, current and/or voltage values (e.g. specific non-zero power, non-zero current and/or non-zero voltage values). The first and second power profiles may be non-identical. The first power profile may be greater than the second power profile. For example, an average power output (e.g. root-mean-square power) of the first power profile may be greater than an average power output (e.g. root-mean-square power) of the second power profile. An average power output (e.g. root-mean-square power) of the first power profile may be 7.5W ± 0.5W (e.g. 7.5W). An average power output (e.g. root-mean-square power) of the second power profile may be 6.75W ± 0.5W (e.g. 6.75W). The controller may be configured to apply pulse width modulation (e.g. to achieve a specific average power output). The controller may be configured to apply a voltage to an aerosol-generating article associated with the interface (e.g. when supplying power according to the power profiles). The voltage may be in the range 3.2V to 4.2V (e.g. 3.7V ± 0.25V, e.g. 3.7V).

The controller may be configured to detect the presence or absence of a short circuit by probing the first and second electrical contacts with electrical signals (e.g. current and/or voltage). A short circuit may be understood to mean an electrical circuit that allows a current to flow with negligible or very low electrical resistance/impedance. Thus, a short circuit may be detected by the controller by measuring a negligible or very low electrical resistance/impedance between the first and second electrical contacts (e.g. by supplying a current/voltage to the first and second electrical contacts and measuring the electrical resistance/impedance).

The controller may be configured to apply an input voltage to the second electrical contact (e.g. a voltage of the power source), measure an output voltage of the first electrical contact, and compare the output voltage to the input voltage. If the output voltage substantially matches the input voltage, then a short circuit is present (i.e. detected). If the output voltage substantially differs from the input voltage, then a short circuit is absent (i.e. not detected).

Each electrical contact may be resiliently deformable e.g. may be biased to contact the aerosol-generating article (e.g. the first or second aerosol-generating article) associated with the interface. For example, each electrical contact may comprise a sprung element. Each electrical contact may comprise a pogo pin.

The aerosol-generating device may comprise a recess for receiving the aerosol-generating article. The recess may be encircled by a perimeter wall. The interface may be located within the recess (e.g. the interface may form a base of the recess). When the aerosol-generating article (e.g. the first or second aerosol-generating article) is associated with the interface, the aerosol-generating article (e.g. the first or second aerosol-generating article) may be at least partly received within the recess (e.g. the perimeter wall may encircle and may abut at least part (e.g. a lower portion) of the aerosol-generating article).

The aerosol-generating device may be elongate and may have a device longitudinal axis. The first, second and third electrical contacts may be aligned transverse to the device longitudinal axis. The first, second and third electrical contacts may be arranged along a line. The second electrical contact may be interposed between the first and third electrical contacts. A transverse spacing between the first electrical contact and the second electrical contact may be less than a transverse spacing between the second electrical contact and the third electrical contact. The first electrical contact and the second electrical contact may be located on an opposing side of the device longitudinal axis to the third electrical contact i.e. the device longitudinal axis may be interposed between the second and third electrical contacts.

The aerosol-generating device may have a symmetric (e.g. an elliptical) cross-section (e.g. in a plane perpendicular to the device longitudinal axis). The electrical contacts may be aligned in a direction normal to a plane of symmetry of the device (e.g. aligned with the major or minor axis of the elliptical cross-section). The major and/or minor axes of the elliptical cross-section may be transverse to the device longitudinal axis. The recess may be symmetric (e.g. the recess may have a symmetric cross-section in a plane perpendicular to the device longitudinal axis). The electrical contacts may be aligned in a direction normal to a plane of symmetry of the recess. The aerosol-generating device and the recess may be symmetric in the same planes.

The aerosol-generating device may comprise a device retaining element for retaining the aerosol-generating article (e.g. the first or second aerosol-generating article) to the aerosol-generating device (e.g. for retaining the first or second aerosol-generating article in abutment with the interface). The device retaining element may comprise one or more magnets and/or one or more ferrite elements. The device retaining element may be located in the recess e.g. at the interface.

The aerosol-generating device may comprise a power source (e.g. a battery). The battery may be a rechargeable battery. The power source (e.g. the battery) may output a voltage in the range 3.2V to 4.2V (e.g. 3.7V ± 0.25V, e.g. 3.7V). The controller may be configured to apply the power source voltage to the aerosol-generating article (e.g. via the second and third electrical contacts). The power source may be configured to supply power to the controller. The power source may be configured to supply power and/or apply a voltage to the electrical contacts via the controller. Accordingly, when the aerosol-generating article (e.g. the first or second aerosol-generating article) is associated with the interface, power from the power source may be supplied to the aerosol-generating article (e.g. the first or second aerosol-generating article) (e.g. in order to generate an aerosol).

In a second aspect, the present disclosure provides, a first aerosol-generating article for use with the aerosol-generating device of the first aspect. The first aerosol-generating article may comprise: a first electrically-conductive element; and a second electrically-conductive element. The electrically-conductive elements may be configured such that, when the first aerosol-generating article is associated with the interface: the first electrically-conductive element short circuits the first and second electrical contacts of the device; and the second electrically-conductive element electrically contacts the third electrical contact of the aerosol-generating device.

In this way, when the first aerosol-generating article of the second aspect is received by the aerosol-generating device of the first aspect, the first electrically-conductive element will short circuit the first and second electrical contacts and the aerosol-generating device will enable power to the first aerosol-generating article according to the first power profile.

The first aerosol-generating article may comprise a lower portion having a base surface for association with the interface of the aerosol-generating device. The first electrically-conductive element may include a first exposed portion on the base surface so as to contact one or more of the electrical contacts (e.g. the first and second electrical contacts). The second electrically-conductive element may include a second exposed portion on the base surface so as to contact one or more of the electrical contacts (e.g. the third electrical contact). The first and/or second electrically-conductive element may be elongate and may partly define the base surface of the first aerosol-generating article. The first and second electrically-conductive elements (e.g. the first and second exposed portions) may be substantially coplanar and may be substantially coplanar with the base surface of the first aerosol-generating article. The first and/or second electrically-conductive element (e.g. the first and/or second exposed portions) may be substantially rectangular and/or planar.

The first aerosol-generating article may be elongate and may have an article longitudinal axis. The electrically-conductive elements may extend transverse to the article longitudinal axis. The base surface of the first aerosol-generating article may extend in a plane perpendicular to the article longitudinal axis. The first and second electrically-conductive elements may be located on the base surface on opposing sides of the article longitudinal axis. The base surface may be symmetric (e.g. may have a symmetric cross-section in a plane perpendicular to the article longitudinal axis). The electrically-conductive elements may be aligned in a direction normal to a plane of symmetry of the aerosol-generating article (e.g. aligned with the major or minor axis of the elliptical cross-section). The major and/or minor axes of the elliptical cross-section may be transverse to the article longitudinal axis.

The first and second electrically-conductive elements may be arranged symmetrically on the base surface. The electrically-conductive elements may be sized, shaped and/or positioned such that they are mirror images of one another about a plane of symmetry of the base surface (e.g. a plane through the article longitudinal axis and the major or minor axis of the elliptical base surface).

In these ways, the first aerosol-generating article may short circuit the first and second electrical contacts (e.g. the first and second electrical contacts) of the aerosol-generating device irrespective of the relative orientation (e.g. about the device longitudinal axis and the article longitudinal axis) between the first aerosol-generating article and the aerosol-generating device. Accordingly, user experience may be improved because the aerosol-generating device can distinguish the first aerosol-generating article (from the second aerosol-generating article) correctly irrespective of orientation. For example, in a first orientation of the first aerosol-generating article, the first electrically-conductive element may short circuit the first and second electrical contacts whereas in a second orientation of the first aerosol-generating article (e.g. the first aerosol-generating article rotated 180 degrees about the article longitudinal axis relative to the aerosol-generating device) the second electrically-conductive element may short circuit the first and second electrical contacts. Thus, in both instances, the aerosol-generating device will detect a short circuit between the first and second electrical contacts and correctly supply power to the first aerosol-generating article according to the first power profile.

The first aerosol-generating article may comprise an article retaining element for retaining the first aerosol-generating article to an aerosol-generating device. The article retaining element may comprise one or more magnets and/or one or more ferrite elements. The article retaining element may be located proximal and/or between the electrically-conductive elements. For example, the article retaining element may be provided on the base surface of the first aerosol-generating article.

The first aerosol-generating article may comprise an aerosol-generating unit. The aerosol-generating unit may include a heater (e.g. a mesh heater, a ceramic heater, or other means of generating heat). The heater may comprise a helically wound heating element (coil heating element), a mesh heating element comprising a plurality of interconnected cells that together define a heating area (e.g. formed by a perforated sheet or network of interleaved wires), and/or a heater track (e.g. in the form of a conductive trace formed on a substrate).

The aerosol-generating unit (e.g. the heater) may be electrically connected to the first and second electrically-conductive elements (e.g. such that power can be supplied to the aerosol-generating unit via the electrically-conductive elements). For example, the heater may comprise a heating element (e.g. a conductive element having a resistance) such that applying a voltage across the electrically-conductive elements may cause a current to flow through the heater thereby generating heat. The aerosol-generating unit may be housed in the lower portion of the first aerosol-generating article.

The first aerosol-generating article may comprise a storage portion (e.g. a tank). The storage portion may be configured to receive aerosol-generating material (e.g. liquid aerosol-generating material). The aerosol-generating article may be configured such that liquid aerosol-generating material from the tank is aerosolised by the aerosol-generating unit (e.g. the heater) upon power being supplied via the electrically-conductive elements. The generated aerosol may be inhalable by a user via a mouthpiece.

In a third aspect, the present disclosure provides, an aerosol-generating system. The aerosol-generating system may comprise: an aerosol-generating device and a first aerosol-generating article. The aerosol-generating device may comprise an interface for receiving the first aerosol-generating article. The interface may comprise first, second and third electrical contacts. The first aerosol-generating article may comprise an electrically-conductive element. The electrically-conductive element may be configured to short circuit the first and second electrical contacts when associated with the interface of the aerosol-generating device.

The aerosol-generating device may be as described with reference to the first aspect. The first aerosol-generating article may be as described with reference to the second aspect. Thus, the electrically conductive element may be a first electrically-conductive element. The first aerosol-generating article may comprise a second electrically-conductive element. The second electrically-conductive element may be configured to electrically contact the third electrical contact when associated with the interface of the aerosol-generating device.

The first and second electrical contact of the aerosol-generating device may be positioned such that they contact the first electrically-conductive element of the first aerosol-generating article when the first aerosol-generating article is associated with the interface of the aerosol-generating device. The third electrical contact of the aerosol-generating device may be positioned such that it electrically contacts the second electrically-conductive element of the first aerosol-generating article when the first aerosol-generating article is associated with the interface of the aerosol-generating device. Thus, when the first aerosol-generating article is associated with the interface of the aerosol-generating device, the aerosol-generating device will detect a short circuit between the first and second electrical contacts causing the aerosol-generating device to supply power to the first aerosol-generating article according to the first power profile via the first or second electrical contact, and the third electrical contact.

If an alternative (second) aerosol-generating article were received by the aerosol-generating device such that the first and second electrical contacts were not short circuited (e.g. if the second aerosol-generating article merely included electrically-conductive elements that each contacted a single electrical contact of the aerosol-generating device), then the aerosol-generating device would supply power to the alternative (second) aerosol-generating article according to the second power profile.

In a fourth aspect, the present disclosure provides, a method of operating an aerosol-generating device. The aerosol-generating device may comprise an interface for receiving an aerosol-generating article. The interface may comprise first, second and third electrical contacts. The method may comprise the steps: providing an aerosol-generating article to the interface; and enabling power to the aerosol-generating article via the second and third electrical contact according to: a first power profile if a short circuit between the first and second electrical contacts is detected; or a second power profile if a short circuit between the first and second electrical contacts is not detected.

The aerosol-generating device may be as described with reference to the first aspect. The aerosol-generating article may be as described with reference to the first aerosol-generating article of the second aspect.

Detecting the presence or absence of a short circuit between the first and second electrical contacts may comprise applying an input voltage to the second electrical contact (e.g. a voltage of the power source), measuring an output voltage of the first electrical contact, and comparing the output voltage to the input voltage. If the output voltage substantially matches the input voltage, then a short circuit is present (i.e. detected). If the output voltage substantially differs from the input voltage, then a short circuit is absent (i.e. not detected).

Supplying power to the aerosol-generating article may include applying a voltage (e.g. in the range 3.2V to 4.2V) to the aerosol-generating article (e.g. from the power source). The controller may use pulse width modulation to apply the power profiles. An average power output (e.g. root-mean-square power) of the first power profile may be 7.5W ± 0.5W (e.g. 7.5W). An average power output (e.g. root-mean-square power) of the second power profile may be 6.75W ± 0.5W (e.g. 6.75W).

The preceding summary is provided for purposes of summarizing some examples to provide a basic understanding of aspects of the subject matter described herein. Accordingly, the above-described features should not be construed to narrow the scope of the subject matter described herein in any way. Moreover, the above and/or following examples may be combined in any suitable combination to provide further examples, except where such a combination is clearly impermissible or expressly avoided. Other features, aspects, and advantages of the subject matter described herein will become apparent from the following text and the accompanying figures.

### BRIEF DESCRIPTION OF THE FIGURES

Aspects, features and advantages of the present disclosure will become apparent from the following description of examples in reference to the appended figures in which like numerals denote like elements.
Fig. 1 shows an aerosol-generating system according to the disclosure including a first aerosol-generating article;
Fig. 2 shows the aerosol-generating system of Fig. 1 including a second aerosol-generating article; and
Fig. 3 shows a method of operating an aerosol-generating device.

### DETAILED DESCRIPTION OF EMBODIMENTS

It is to be understood that the present disclosure, which includes the specification and claim(s), is not limited by specific construction details or process steps. Rather, it will be clear to those skilled in the art that the systems, apparatuses, and methods described herein can be embodied and practiced in various alternative ways without departing from the scope of the invention.

Unless defined otherwise, scientific and technical terms used herein have their meanings commonly understood by those skilled in the art and that known techniques and procedures may be performed according to conventional methods.

In the present disclosure, the terms "a" and "an" may mean "one", "one or more", "at least one", and "one or more than one" unless the context clearly indicates otherwise. Likewise, plural terms shall include the singular unless otherwise required by context.

In the present disclosure, the term "or" means an inclusive "and/or" unless explicitly indicated to refer to alternatives only or unless the alternatives are mutually exclusive.

In the present disclosure, the terms "comprising, "having," "including," or "containing" (and any forms thereof, such as "comprise" and "comprises," "have" and "has," "includes" and "include," or "contains" and "contain," respectively) are inclusive or open-ended and do not exclude additional, unrecited elements or method steps.

Unless stated otherwise, the features of examples disclosed herein, and of the claims, may be integrated together in any suitable arrangement such that combinations of features are not limited by the described forms, particularly the form (e.g. numbering) of example(s), embodiment(s), or dependency of claim(s). This also applies to the phrase "in one example", "according to an example" and the like, which are merely a stylistic form of wording not to be construed as limiting the features to a separate embodiment. This is to say, a reference to 'an,' 'one,' or 'some' examples(s) may be a reference to any one or more, and/or all examples, or combination(s) thereof, disclosed. Also, similarly, reference to "the" example may not be limited to the immediately preceding embodiment. Further, all references to one or more embodiments or examples are to be construed as non-limiting to the claims.

The present disclosure may be better understood in view of the following explanations, wherein the terms used that are separated by "or" may be used interchangeably.

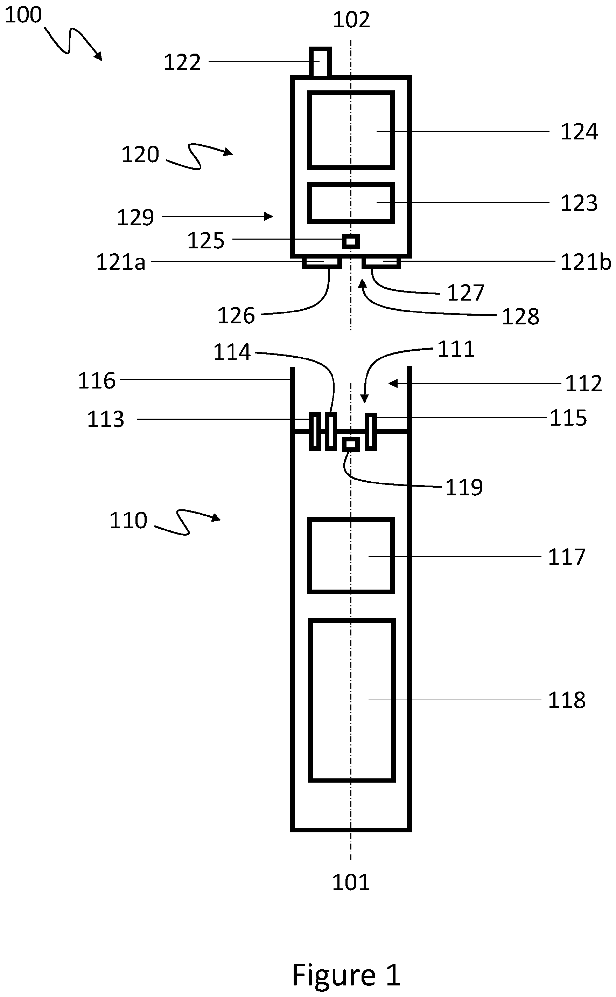

Fig. 1 shows an aerosol-generating system 100. The aerosol-generating system 100 comprises an aerosol-generating device 110 and a first aerosol-generating article 120. The aerosol-generating device 110 is configured to receive an aerosol-generating article (e.g. the first aerosol-generating article 120).

The aerosol-generating device 110 comprises an interface 111 for receiving an aerosol-generating article (e.g. the first aerosol-generating article 120). The interface 111 comprises three electrical contacts: a first electrical contact 113, a second electrical contact 114, and a third electrical contact 115. The aerosol-generating device 110 also comprises a controller 117. The controller 117 is configured to, upon an aerosol-generating article (e.g. the first aerosol-generating article 120) being associated with the interface 111, enable power to the aerosol-generating article (e.g. the first aerosol-generating article 120) via the second and third electrical contacts 114, 115 according to: a first power profile if a short circuit between the first and second electrical contacts 113, 114 is detected; or a second power profile if a short circuit between the first and second electrical contacts 113, 114 is not detected.

The aerosol-generating device 110 comprises a power source 118 in the form of a rechargeable battery. The controller 117 is configured to apply an input voltage to the second electrical contact 114 (in this embodiment, a voltage of the power source 118), measure an output voltage of the first electrical contact 113, and compare the output voltage to the input voltage. If the output voltage substantially matches the input voltage, then a short circuit is present (i.e. detected). If the output voltage substantially differs from the input voltage, then a short circuit is absent (i.e. not detected).

Each electrical contact 113, 114, 115 comprises a pogo pin that is resiliently deformable such that each electrical contact 113, 114, 115 is biased to contact the aerosol-generating article (e.g. the first aerosol-generating article 120) when the aerosol-generating article is associated with the interface 111.

The aerosol-generating device 110 comprises a recess 112 for receiving an aerosol-generating article (e.g. the first aerosol-generating article 120). The recess 112 is encircled by a perimeter wall 116. The interface 111 is located within the recess 112 such that the interface 111 forms a base of the recess 112. When an aerosol-generating article (e.g. the first aerosol-generating article 120) is associated the interface 111, the aerosol-generating article is partly received within the recess 112 such that the perimeter wall 116 encircles and abuts a lower portion of the aerosol-generating article (e.g. a lower portion 129 of the first aerosol-generating article 120).

The aerosol-generating device 110 is elongate and has a device longitudinal axis 101. The electrical contacts 113, 114, 115 are aligned transverse to the device longitudinal axis 101. The electrical contacts 113, 114, 115 are arranged along a line. The second electrical contact 114 is interposed between the first and third electrical contacts 113, 115. A transverse spacing between the first electrical contact 113 and the second electrical contact 114 is less than a transverse spacing between the second electrical contact 114 and the third electrical contact 115. The first electrical contact 113 and the second electrical contact 114 are located on an opposing side of the device longitudinal axis 101 to the third electrical contact 115 such that the device longitudinal axis 101 is interposed between the second and third electrical contacts 114, 115.

The aerosol-generating device 110 has a symmetric elliptical cross-section in a plane perpendicular to the device longitudinal axis 101. The electrical contacts 113, 114, 115 are aligned with the major axis of the elliptical cross-section. The major and minor axes of the elliptical cross-section are transverse to the device longitudinal axis 101. The recess 112 has a symmetric elliptical cross-section in a plane perpendicular to the device longitudinal axis 101.

The aerosol-generating device 110 comprises a device retaining element 119 in the form of a magnet. The first aerosol-generating article 120 comprises an article retaining element 125 in the form of a ferrite plate. When the first aerosol-generating article 120 is associated with the interface 111 of the aerosol-generating device 110, the device retaining element 119 (i.e. the magnet) attracts the article retaining element 125 (i.e. the ferrite plate) to retain the first aerosol-generating article 120 to the interface 111 of the aerosol-generating device 110.

The power source 118 is configured to supply power to the controller 117. The power source 118 is configured to supply power and/or apply a voltage to the electrical contacts 113, 114, 115 via the controller 117. Accordingly, when an aerosol-generating article (e.g. the first aerosol-generating article 120) is associated with the interface 111, power from the power source 118 can be supplied to the aerosol-generating device (e.g. the first aerosol-generating article 120) via the electrical contacts 113, 114, 115 in order to generate an aerosol for inhalation.

An average power output (here, root-mean-square power) of the first power profile is 7.5W. An average power output (here, root-mean-square power) of the second power profile is 6.75W. The controller 117 is configured to apply pulse width modulation to achieve the average power outputs for each power profile. The controller 117 is configured to apply a voltage from the power source 118 in the range 3.2V to 4.2V (e.g. 3.7V) to the aerosol-generating article 120 when associated with the interface 111.

The first aerosol-generating article 120 comprises a first electrically-conductive element 121a and a second electrically-conductive element 121b. The electrically-conductive elements 121a, 121b are configured such that, when the first aerosol-generating article 120 is received by the interface 111 of the aerosol-generating device 110: the first electrically-conductive element 121a short circuits the first and second electrical contacts 113, 114; and the second electrically-conductive element 121b electrically contacts the third electrical contact 115 such that power will be supplied to the first aerosol-generating article 120 from the power source 118 via the controller 117 according to the first power profile.

The first aerosol-generating article 120 comprises a lower portion 129 having a base surface 128 for association with the interface 111 of the aerosol-generating device 110. The first electrically-conductive element 121a includes a first exposed portion 126 on the base surface 128 so as to contact one or more electrical contacts (e.g. the first and second electrical contacts 113, 114 as shown in Fig. 1). The second electrically-conductive element 121b includes a second exposed portion 127 on the base surface 128 so as to contact one or more electrical contacts (e.g. the third electrical contact 115 as shown in Fig. 1). The electrically-conductive elements 121a, 121b are each elongate and partly define the base surface 128 of the first aerosol-generating article 120. The first and second exposed portions 126, 127 are each elongate, rectangular and coplanar.

The first aerosol-generating article 120 is elongate and has an article longitudinal axis 102. The electrically-conductive elements 121a, 121b extend transverse to the article longitudinal axis 102. The base surface 128 extends in a plane perpendicular to the article longitudinal axis 102. The electrically-conductive elements 121a, 121b are located on the base surface 128 on opposing sides of the article longitudinal axis 102. The base surface 128 has a symmetric elliptical cross-section in a plane perpendicular to the article longitudinal axis 102. The electrically-conductive elements 121a, 121b are arranged symmetrically on the base surface 128 and are aligned with the major axis of the elliptical cross-section. The electrically-conductive elements 121a, 121b are sized, shaped and positioned such that they are mirror images of one another about the minor axis of the base surface 128.

The first aerosol-generating article 120 comprises an aerosol-generating unit 123. The aerosol-generating unit 123 comprises a mesh heater. The mesh heater is electrically connected to the electrically-conductive elements 121a, 121b such that power can be supplied to the aerosol-generating unit 123 from the aerosol-generating device 110 via the electrically-conductive elements 121a, 121b. The mesh heater comprises a heating element such that applying a voltage across the electrically-conductive elements 121a, 121b causes a current to flow through the mesh heater thereby generating heat to form an aerosol. The mesh heater comprises a mesh heating element comprising a plurality of interconnected cells that together define a heating area formed by a network of interleaved wires.

In alternative embodiments, the heater comprises a different means of generating heat. For example, the heater may comprise a helically wound heating element (i.e. coil heating element) and/or a heater track in the form of a conductive trace formed on a substrate.

The first aerosol-generating article 120 comprises a storage portion 124 in the form of a tank. The storage portion 124 is configured to receive aerosol-generating material (e.g. liquid aerosol-generating material). The first aerosol-generating article 120 is configured such that liquid aerosol-generating material from the storage portion 124 is aerosolised by the aerosol-generating unit 123 (i.e. the mesh heater) upon power being supplied via the electrically-conductive elements 121a, 121b. The generated aerosol may be inhalable by a user via a mouthpiece 122.

If Fig. 1, the first aerosol-generating article 120 is orientated such that the first electrically-conductive element 121a is aligned with the first and second electrical contacts 113, 114 and the second electrically-conductive element 121b is aligned with the third electrical contact 115. Upon insertion, the first electrically-conductive element 121a will short circuit the first electrical contact 113 and the second electrical contact 114 such that the controller 117 will enable power to the first aerosol-generating article 120 according to the first power profile. However, due to the symmetric nature of the lower portion 129 and the base surface 128 of the first aerosol-generating article 120 as well as the recess 112 of the aerosol-generating device 110, the first aerosol-generating article 120 could be rotated 180 degrees about the article longitudinal axis 102 such that the first electrically-conductive element 121a is aligned with the third electrical contact 115 and the second electrically-conductive element 121b is aligned with the first and second electrical contacts 114, 115. Upon insertion, the second electrically-conductive element 121b will short circuit the first and second electrical contacts 113, 114 such that the controller 117 will enable power to the first aerosol-generating article 120 via the second and third electrical contacts 114, 115 according to the first power profile.

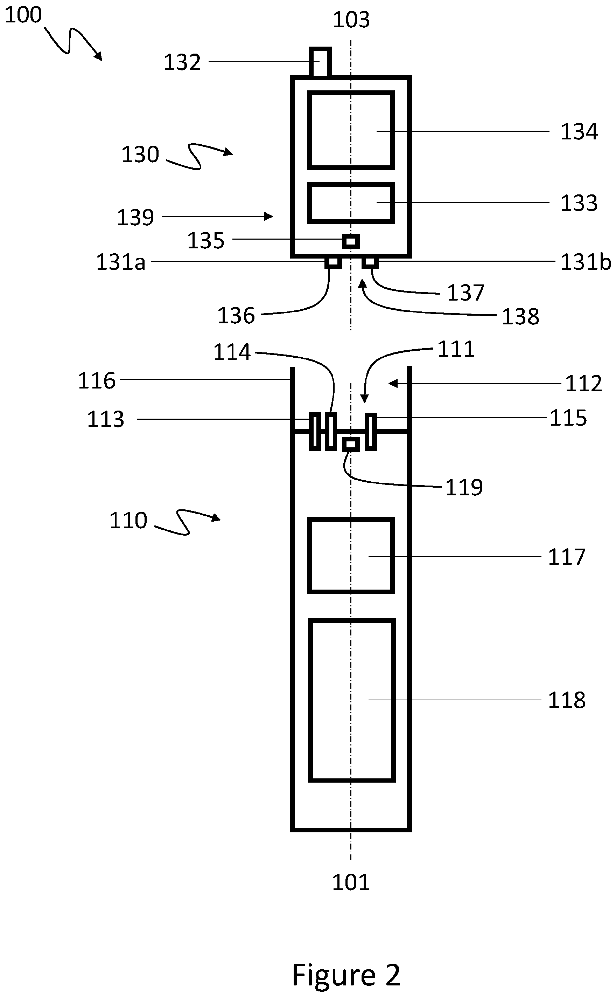

Fig. 2 shows the aerosol-generating system 100 of Fig. 1 where the first aerosol-generating article 120 has been exchanged with a second aerosol-generating article 130. The aerosol-generating device 110 is as described above with reference to Fig. 1. The second aerosol-generating article 130 is substantially similar to the second aerosol-generating article 120 described above with reference to Fig. 1 such that like features have been given like reference numerals.

The second aerosol-generating article 130 differs from the first aerosol-generating article 120 in that the electrically-conductive elements 131a, 131b of the second aerosol-generating article 130 are each configured to only contact a respective single electrical contact of the aerosol-generating device 110 such that no short circuit between the first and second electrical contacts 113, 114 is detected by the aerosol-generating device when the second aerosol-generating article is associated with the interface 111. Further, the aerosol-generating unit 133 comprises a ceramic heater instead of a mesh heater.

As shown in Fig. 2, the first electrically-conductive element 131a is configured to only contact a single electrical contact, in this case, the second electrical contact 114 and the second electrically-conductive element 131b is configured to only contact a single electrical contact, in this case, the third electrical contact 115. Similarly, if the second aerosol-generating article 130 was rotated 180 degrees about the article longitudinal axis 103, the first electrically-conductive element 131a would only contact the third electrical contact 115 and the second electrically-conductive element 131b would only contact the second electrical contact 114. In both orientations, the aerosol-generating device 110 will not detect a short circuit between the first electrical contact 113 and the second electrical contact 114 such that such that the controller 117 will enable power to the second aerosol-generating article 130 via the second and third electrical contacts 114, 115 according to the second power profile.

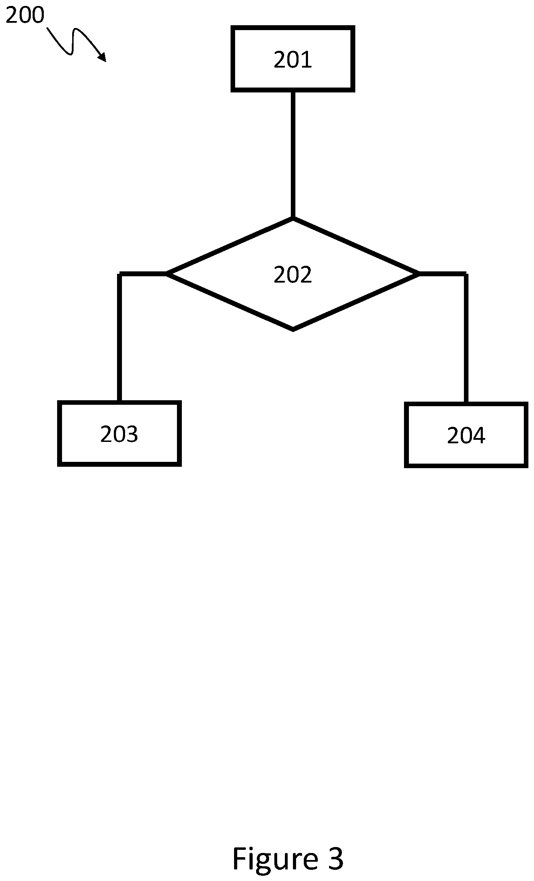

Fig. 3 shows a method 200 of operating the aerosol-generating device 110 of Figs. 1 and 2. Step 201 comprises providing an aerosol-generating article (e.g. the first aerosol-generating article 120) to the interface 111. Step 202 comprises detecting a short circuit or no short circuit between the first and second electrical contacts 113, 114. Detecting the presence or absence of a short circuit between the first and second electrical contacts 113, 114 comprises applying an input voltage to the second electrical contact 114 (in this embodiment, a voltage of the power source 118), measuring an output voltage of the first electrical contact 113, and comparing the output voltage to the input voltage. If the output voltage substantially matches the input voltage, then a short circuit is present (i.e. detected). If the output voltage substantially differs from the input voltage, then a short circuit is absent (i.e. not detected). Step 203 comprises enabling power to the aerosol-generating article (e.g. the first aerosol-generating article 120) via the second and third electrical contacts 114, 115 according to the first power profile if a short circuit between the first and second electrical contacts 113, 114 is detected. In step 203, if a short circuit is detected, the controller 117 applies a voltage from the power source 118 in the range 3.2V to 4.2V to the aerosol-generating article (e.g. the first aerosol-generating article 120) via the second and third electrical contacts 114, 115 and uses pulse width modulation to achieve an average power output of 7.5W from the mesh heater. Step 204 comprises enabling power to the aerosol-generating article (e.g. the second aerosol-generating article 130) via the second and third electrical contacts 114, 115 according to the second power profile if a short circuit between the first and second electrical contacts 113, 114 is not detected. In step 204, if a short circuit is not detected, the controller 117 applies a voltage from the power source 118 in the range 3.2V to 4.2V to the aerosol-generating article (e.g. the second aerosol-generating article 130) via the second and third electrical contacts 114, 115 and uses pulse width modulation to achieve an average power output of 6.75W from the ceramic heater. Step 202 is a decision step (i.e. based on whether a short circuit between the first and second electrical contacts 113, 114 is detected or not) such that steps 203 and 204 are alternatives.

## Claims

1. An aerosol-generating device comprising:
an interface for receiving an aerosol-generating article, the interface comprising first, second and third electrical contacts; and
a controller configured to, upon an aerosol-generating article being associated with the interface, enable power to the aerosol-generating article via the second and third electrical contacts according to:
a first power profile if a short circuit between the first and second electrical contacts is detected; or
a second power profile if a short circuit between the first and second electrical contacts is not detected.

2. The aerosol-generating device of claim 1, wherein a transverse spacing between the first and second electrical contacts is less than a transverse spacing between the second and third electrical contacts.

3. The aerosol-generating device of claim 2, wherein the aerosol-generating device has a device longitudinal axis and the first and second electrical contacts are arranged on an opposing side of the device longitudinal axis to the third electrical contact.

4. The aerosol-generating device of any preceding claim, wherein an average power output of the first power profile is a greater than an average power output of the second power profile.

5. The aerosol-generating device of any preceding claim, wherein the interface is located within a recess.

6. The aerosol-generating device of claim 5, wherein the recess has a symmetric cross-sectional area.

7. The aerosol-generating device of any preceding claim, wherein at least one of the electrical contacts is resiliently deformable.

8. A first aerosol-generating article for use with the aerosol-generating device of any one of claims 1 to 7, the first aerosol-generating article comprising:
a first electrically-conductive element; and
a second electrically-conductive element;
wherein, the electrically-conductive elements are configured such that, when the first aerosol-generating article is received by the interface:
the first electrically-conductive element short circuits the first and second electrical contacts; and
the second electrically-conductive element electrically contacts the third electrical contact.

9. The first aerosol-generating article of claim 8, wherein at least one of the electrically-conductive elements is exposed at a base surface of the first aerosol-generating article.

10. The first aerosol-generating article of claim 9, wherein the base surface is symmetric.

11. The first aerosol-generating article of claim 10, wherein the electrically-conductive elements are arranged symmetrically on the base surface.

12. The first aerosol-generating article of any one of claims 8 to 11, wherein the first aerosol-generating article has an article longitudinal axis and the electrically-conductive elements extend transverse to the article longitudinal axis.

13. The first aerosol-generating article of any one of claims 8 to 11, further comprising a tank.

14. An aerosol-generating system comprising:
an aerosol-generating device comprising an interface for receiving an aerosol-generating article, the interface comprising first, second and third electrical contacts; and
a first aerosol-generating article comprising an electrically-conductive element configured to short circuit the first and second electrical contacts when associated with the interface.

15. A method of operating an aerosol-generating device comprising an interface for receiving an aerosol-generating article, the interface comprising first, second and third electrical contacts, the method comprising the steps:
providing an aerosol-generating article to the interface; and
enabling power to the aerosol-generating article via the second and third electrical contacts according to:
a first power profile if a short circuit between the first and second electrical contacts is detected; or
a second power profile if a short circuit between the first and second electrical contacts is not detected.
